# EUROPÄISCHE PATENTSCHRIFT

(11) **EP 2 307 259 B1**
(45) Veröffentlichungstag und Bekanntmachung des Hinweises auf die Patenterteilung: **27.11.2013**
(21) Anmeldenummer: 09775553.2
(22) Anmeldetag: 06.07.2009
(51) Int. Cl.: B62D 1/19, B62D 1/184

(54) **LENKSÄULE FÜR EIN KRAFTFAHRZEUG**
STEERING COLUMN FOR A MOTOR VEHICLE
COLONNE DE DIRECTION POUR UN VÉHICULE MOTORISÉ

(30) Priorität: 24.07.2008 DE 102008034807
(43) Veröffentlichungstag der Anmeldung: 13.04.2011
(73) Patentinhaber: ThyssenKrupp Presta Aktiengesellschaft, 9492 Eschen (LI)
(72) Erfinder: SULSER, Hansjörg, FL-9487 Gamprin (LI); HUBER, Sebastian, A-6840 Götzis (AT)
(74) Vertreter: Hofmann, Ralf U.
(86) Internationale Anmeldenummer: PCT/AT2009/000264
(87) Internationale Veröffentlichungsnummer: WO 2010/009486

(56) Entgegenhaltungen:
- EP-A- 1 967 442
- WO-A1-2009/147325
- DE-A1- 4 138 239
- DE-B3-102005 052 123
- FR-A- 2 872 474
- GB-A- 2 268 125
- GB-A- 2 309 204
- GB-A- 2 344 078

## Beschreibung

Die Erfindung bezieht sich auf eine Lenksäule für ein Kraftfahrzeug, die zumindest in ihrer Längsrichtung verstellbar ist, umfassend eine Trageinheit, die mit dem Chassis des Kraftfahrzeugs verbindbar ist, eine eine Lenkspindel drehbar lagernde Stelleinheit und einen Spannmechanismus, in dessen geöffnetem Zustand die Stelleinheit gegenüber der Trageinheit zumindest in die Längsrichtung der Lenksäule verstellbar ist und in dessen geschlossenem Zustand die eingestellte Position der Stelleinheit gegenüber der Trageinheit in einem Normalbetrieb festgestellt ist und der mindestens ein Arretierteil umfasst, das in Längsrichtung der Lenksäule gegenüber der Trageinheit unverschiebbar ist und das im geschlossenen Zustand des Spannmechanismus mit einem Eingriffsteil verspannt ist und in geöffnetem Zustand des Spannmechanismus vom Eingriffsteil beabstandet ist, wobei sich das Eingriffsteil bei der Verstellung der Stelleinheit gegenüber der Trageinheit in Längsrichtung der Lenksäule im geöffneten Zustand des Spannmechanismus mit der Stelleinheit mitbewegt und die Stelleinheit derart mit dem Eingriffsteil verbunden ist, dass sie im Normalbetrieb in Längsrichtung der Lenksäule unverschiebbar gegenüber dem Eingriffsteil gehalten ist und in einem Crashfall gegenüber dem Eingriffsteil unter Energieabsorption in Längsrichtung der Lenksäule verschiebbar ist, wobei das Eingriffsteil mit mindestens einem Biegedraht oder -streifen zusammenwirkt und wobei das Eingriffsteil bei der Verschiebung der Stelleinheit gegenüber dem Eingriffsteil im Crashfall durch die Verspannung mit dem Arretierteil unverschiebbar gegenüber dem Arretierteil gehalten ist.

Lenksäulen, die zur Anpassung der Position des Lenkrades an die Sitzposition des Fahrers verstellbar sind, sind in unterschiedlichen Ausführungsformen bekannt. Neben verstellbaren Lenksäulen, die nur in die Längen- oder Höhen- bzw. Neigungsrichtung verstellbar sind, sind sowohl in die Längen- als auch Höhen- bzw. Neigungsrichtung verstellbare Lenksäulen bekannt.

Als Sicherheitsmaßnahme im Falle eines Fahrzeugcrashes ist es bekannt, die Lenksäule in einem an das lenkradseitige Ende anschließenden Abschnitt unter Energieaufnahme in Längsrichtung der Lenksäule verschiebbar auszubilden. Eine übliche Ausbildungsform sieht hierfür vor, dass die Trageinheit, gegenüber der im geöffneten Zustand des Spannmechanismus die Stelleinheit, die die Lenkspindel drehbar lagert, zur Einstellung der Position der Lenksäule verstellbar ist, derart mit einem am Fahrzeugchassis angebrachten Chassisteil verbunden ist, dass sie in energieverzehrender Weise gegenüber diesem verschiebbar ist. Eine derartige Konstruktion zeigt beispielsweise die US 5,517,877 A.

Aus der FR 2 872 474 A1 geht eine ähnliche verstellbare Lenksäule hervor. Die Trageinheit, die die im geöffneten Zustand des Spannmechanismus verstellbare Stelleinheit lagert, ist über einen Biegedraht mit einem chassisfesten Teil verbunden und kann sich gegenüber diesem im Crashfall unter Verbiegung des Biegedrahts verschieben.

Weitere Lenksäulen, die im Crashfall gegenüber energieabsorbierenden Elementen kollabierbar sind, gehen aus der GB 2 344 078 A und DE 4 138 239 A1 hervor.

Aus der DE 28 21 707 A1 ist eine nicht gattungsgemäße, da nicht verstellbare, Lenksäule bekannt geworden, bei der das die Lenkspindel drehbar lagernde Mantelrohr beidseitig abstehende Flügel aufweist, die mittels Befestigungsblocks und diese durchsetzende Schrauben am Chassis verbunden ist. Im Crashfall können sich die Flügel von den Befestigungsblocks lösen, wodurch eine Verschiebung des Mantelrohrs ermöglicht wird. Hierbei sind zwischen den Befestigungsblocks und den Flügeln U-förmige Biegestreifen vorgesehen, an denen bei der Verschiebung des Mantelrohrs Verformungsarbeit geleistet wird. Die Biegestreifen sind hierbei in Kammern der Flügel eingeschlossen und liegen an einander gegenüberliegenden Seitenwänden der Kammer an, sodass der Rollradius des jeweiligen Biegestreifens bei seiner Verformung begrenzt und vorgegeben wird.

Eine verstellbare Lenksäule, die eine die Lenkspindel drehbar lagernde Stelleinheit und eine Trageinheit umfasst, gegenüber der die Stelleinheit im geöffneten Zustand eines Spannmechanismus zur Einstellung der Position der Lenksäule zumindest in Längsrichtung der Lenksäule verstellbar ist, geht aus der EP 0 598 857 B1 hervor. Im Crashfall kann sich die Stelleinheit gegenüber der Trageinheit bzw. einem Spannbolzen des Spannmechanismus in Längsrichtung der Lenksäule verschieben. Zur Energieabsorption sind mit der Stelleinheit mitgenommene und um den Spannbolzen gelegte Biegestreifen bzw. Biegedrähte vorhanden, welche verformt werden. Ein Nachteil dieser Lösung besteht darin, daß der mögliche Verschiebeweg bzw. die Charakteristik der Energieabsorption bei dieser Einrichtung von der jeweils eingestellten Länge der Lenksäule abhängen.

Aus der US 5,961,146 A ist weiters eine nicht gattungsgemäße, im Normalbetrieb nur in die Höhenrichtung verstellbare Lenksäule bekannt. In ähnlicher Weise wie zuvor beschrieben ist ein um den Spannbolzen des Spannmechanismus U-förmig gebogener Biegedraht vorhanden, der im Crashfall von der sich gegenüber dem Spannbolzen in Längsrichtung der Lenksäule verschiebenden Stelleinheit mitgenommen wird, wobei Biegearbeit geleistet wird.

Eine Lenksäule der eingangs genannten Art geht aus der WO 2007/048153 A2 hervor. Im geschlossenen Zustand des Spannmechanismus wird das Eingriffsteil durch das Arretierteil des Spannmechanismus an einer Verschiebung gegenüber diesem Arretierteil gehindert. Die Stelleinheit kann sich gegenüber dem Eingriffsteil unter Energieabsorption in Längsrichtung der Lenksäule verschieben. Zur Energieabsorption dient ein am Eingriffsteil angebrachter Bolzen, der in ein Langloch eines an der Stelleinheit angebrachten Energieabsorptionsteils ragt und bei seiner Verschiebung im Crashfall dieses Langloch aufweitet. Um eine definierte Energieabsorption zu erreichen, müssen die Materialeigenschaften des Energieabsorptionsteils im Bereich des Langlochs in reproduzierbarer Weise genau festgelegt sein.

Ähnliche Lenksäulen sind auch aus der EP 0 849 141 A1 und EP 1 464 560 A2 bekannt. Die Eingriffsteile sind nach Art eines Schlittens von Führungsteilen in Längsrichtung der Lenksäule verschiebbar geführt, wobei sie gegenüber den Führungsteilen reibschlüssig gehalten sind oder diese unter Energieverzehrung plastisch verformen. Bei einer reibschlüssigen Halterung geht die Spannkraft des Spannmechanismus in das Ausmaß der Energieabsorption ein und bei einer plastischen Verformung der Führungsteile müssen deren Materialeigenschaften in genau definierter Weise reproduzierbar ausgebildet sein.

Aus der prioritätsälteren, nicht vorveröffentlichten WO 2009/147325 A1 geht eine Lenksäule hervor, bei der beim Schließen eines Spannmechanismus ein Arretierteil durch Drehung um die Achse eines Spannbolzens des Spannmechanismus mit einem Eingriffsteil in Eingriff gelangt, wobei das Arretierteil gegenüber einer chassisfesten Trageinheit in Längsrichtung der Lenksäule unverschiebbar gehalten ist und das Eingriffsteil im Normalbetrieb in Längsrichtung der Lenksäule unverschiebbar gegenüber der die Lenkspindel drehbar lagernden Stelleinheit gehalten ist. Die Stelleinheit ist im Crash-Fall gegenüber dem Eingriffsteil verschiebbar, wobei sich ein Biegedraht verformt, der zwei über eine Umbiegung verbundene Schenkel aufweist, von denen einer am Eingriffsteil festgelegt ist und der andere um einen Vorsprung der Stelleinheit herumgezogen wird.

Aufgabe der Erfindung ist es eine verstellbare Lenksäule der eingangs genannten Art bereitzustellen, bei der eine sehr gut reproduzierbare und in ihrer Charakteristik vorgebbare Energieabsorption erreichbar ist, wobei der Bauraum für die Energieabsorption möglichst gering ist. Erfindungsgemäß gelingt dies durch eine Lenksäule mit den Merkmalen des Anspruchs 1.

Bei der erfindungsgemäßen Lenksäule wirkt das Eingriffsteil mit mindestens einem Biegedraht oder -streifen zusammen und verformt im Crashfall den Biegedraht oder -streifen, wenn sich die Stelleinheit gegenüber dem Eingriffsteil verschiebt. Das Eingriffsteil ist hierbei durch die Verspannung mit dem Arretierteil unverschiebbar gegenüber dem Arretierteil gehalten, welches seinerseits in Längsrichtung der Lenksäule gegenüber der Trageinheit unverschiebbar ist. Zumindest ein Abschnitt des Biegedrahts oder-streifens wird bei der Verschiebung der Stelleinheit in Längsrichtung der Lenksäule von der Stelleinheit mitgenommen. Die Verformung des Biegedrahts oder -streifens erfolgt durch Biegung des Biegedrahts oder -streifens oder umfasst zumindest eine solche. Es kann hierbei eine relativ genau definierte Energieabsorption erreicht werden. Dabei ist der Verlauf der Energieabsorption über den Verschiebeweg, beispielsweise progressiv, mit einfachen Mitteln einstellbar. Bei einem solchen Biegedraht oder-streifen handelt es sich um ein preiswertes Element.

Vorteilhafterweise kann bei einer erfindungsgemäßen Lenksäule der im Falle eines Fahrzeugcrashes mögliche, unter Energieabsorption durchlaufene Verschiebeweg unabhängig von der eingestellten Position der Lenksäule sein. Da das Arretierteil bezogen auf die Längsrichtung der Lenksäule bzw. Lenkspindel unverschiebbar gegenüber der Trageinheit ist und das Eingriffsteil bei der Verstellung der Stelleinheit gegenüber der Trageinheit im geöffneten Zustand des Spannmechanismus sich mit der Stelleinheit mitbewegt, kommen also das Arretierteil und das Eingriffsteil bei unterschiedlichen Längseinstellungen der Lenksäule in unterschiedlichen Stellungen in gegenseitige Anlage, wenn der Spannmechanismus geschlossen wird. Bei der Verspannung des Arretierteils mit dem Eingriffsteil im geschlossenen Zustand des Spannmechanismus ist der Verschiebung des Eingriffsteils gegenüber dem Arretierteil durch, vorzugsweise formschlüssig, zusammenwirkende Arretierelemente, vorteilhafterweise durch zusammenwirkende Verzahnungen, entgegengewirkt. Die Feststellung der Lenksäule im geschlossenen Zustand des Spannmechanismus gegenüber einer Längsverstellung erfolgt somit zumindest auch über das Zusammenwirken des Arretierteils mit dem Eingriffsteil. Zusätzliche, beispielsweise reibschlüssig wirkende, Feststellelemente zur Feststellung der Lenksäule gegenüber einer Längsverstellung im geschlossenen Zustand des Spannmechanismus können vorhanden sein.

Der Biegedraht oder -streifen weist zwei über eine Umbiegung verbundene Schenkel auf, von denen einer am Eingriffsteil festgelegt ist und der andere von der Stelleinheit oder einem an diesem festgelegten Teil mitgenommen wird, wenn sich die Stelleinheit gegenüber der Trageinheit im Crashfall verschiebt. Der andere Schenkel liegt hierbei an einem gegenüber der Stelleinheit festen Anschlag an. Die beiden Schenkel des Biegedrahts oder -streifens sind insbesondere über eine Umbiegung von 150° bis 220°, vorzugsweise 180°, miteinander verbunden, sodass sich eine U-förmige Ausbildung des Biegedrahts oder - streifens ergibt. In einer vorteilhaften Ausführungsform der Erfindung ist der Biegedraht oder -streifen hierbei in einem Gehäuse zumindest teilweise eingeschlossen, welches mit Vorteil gegenüber der Stelleinheit in Längsrichtung der Lenksäule unverschiebbar ist. Das Gehäuse kann dabei einteilig oder mehrteilig sein. Je nach technischen Gegebenheiten kann es auch vorteilhaft sein, dass das Gehäuse oder Teile des Gehäuses an der Trageinheit festgelegt sind. Die Wände dieses Gehäuses können in einer möglichen Ausführungsform alle vom die Lenkspindel drehbar lagernden Mantelrohr gebildet werden. Bevorzugt ist aber am Mantelrohr der Stelleinheit mindestens ein Teil angebracht, welches mindestens eine Wand des Gehäuses bildet. Hierbei ist es denkbar und möglich, dass alle Wände des Gehäuses von mindestens einem am Mantelrohr angebrachten Teil gebildet werden oder dass mindestens eine Wand vom Mantelrohr selbst gebildet wird. Bei diesem am Mantelrohr angebrachten Teil, das mindestens eine Wand des den Biegedraht oder - streifen aufnehmenden Gehäuses bildet, kann es sich um eine Schiene handeln, die das Eingriffsteil in Längsrichtung der Lenksäule gegenüber der Stelleinheit verschiebbar führt. Vorzugsweise ist der Biegedraht oder -streifen mit dem Eingriffsteil über einen Mitnehmer verbunden, der durch einen in Längsrichtung der Lenksäule verlaufenden Schlitz in einer Wand des Gehäuses ragt.

Weitere Vorteile und Einzelheiten der Erfindung werden im Folgenden anhand der beiliegenden Zeichnung erläutert. In dieser zeigen:
Fig. 1 eine Schrägsicht einer Lenksäule gemäß der Erfindung;
Fig. 2 die Lenksäule von Fig. 1 in Seitenansicht;
Fig. 3 eine Schrägsicht der Stelleinheit mit dem von ihm drehbar gelagerten Abschnitt der Lenkspindel;
Fig. 4 einen Schnitt entlang der Linie BB von Fig. 2;
Fig. 5 einen Schnitt entlang der Linie AA von Fig. 2;
Fig. 6 einen Schnitt entlang der Linie CC von Fig. 4;
Fig. 7 einen Schnitt entlang der Linie DD von Fig. 4;
Fig. 8 einen Schnitt entlang der Linie EE von Fig. 4;
Fig. 9 eine Seitenansicht des Biegedrahts oder -streifens;
Fig. 10 eine stirnseitige Ansicht der am Mantelrohr festgelegten Schiene;
Fig. 11 und 12 eine stirnseitige Ansicht und eine Seitenansicht des Eingriffsteils;
Fig. 13 einen Ausschnitt eines Schnittes entlang der Linie EE von Fig. 4, nach einem Fahrzeugcrash.

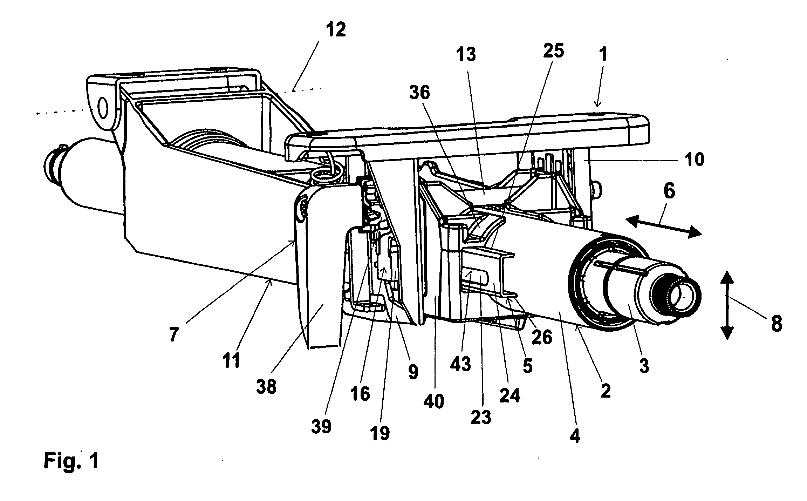

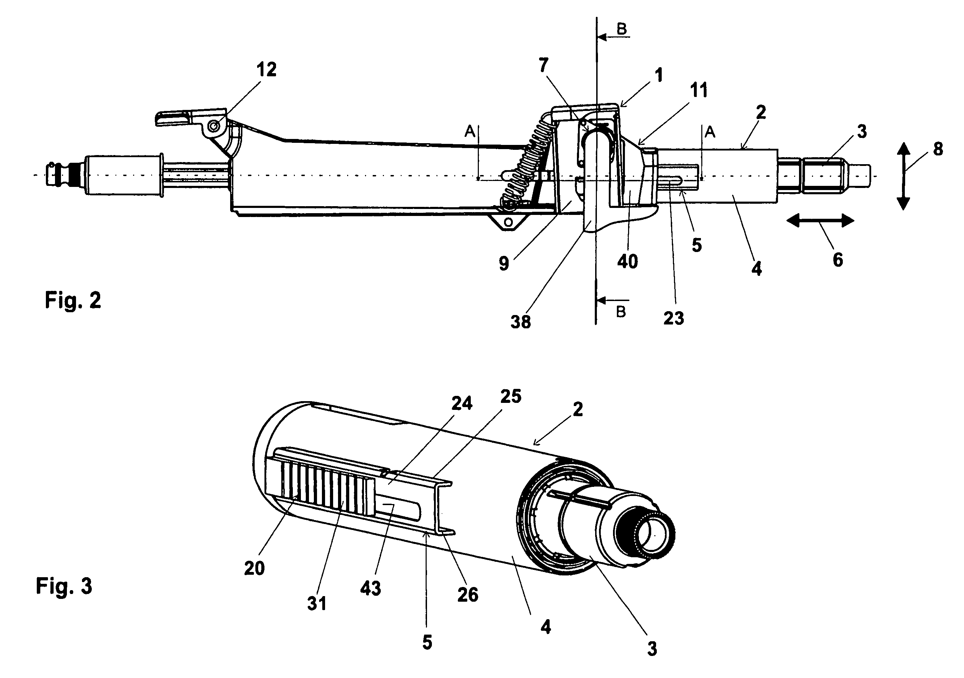

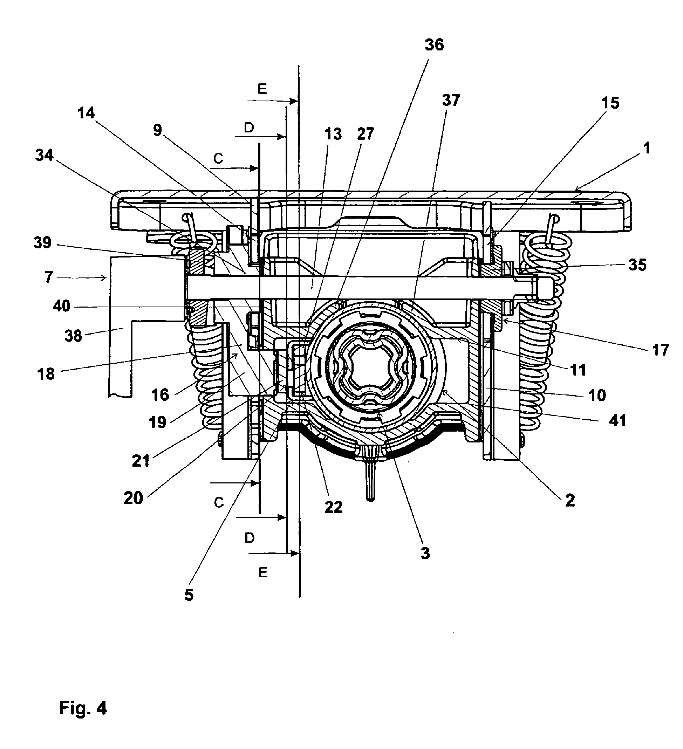

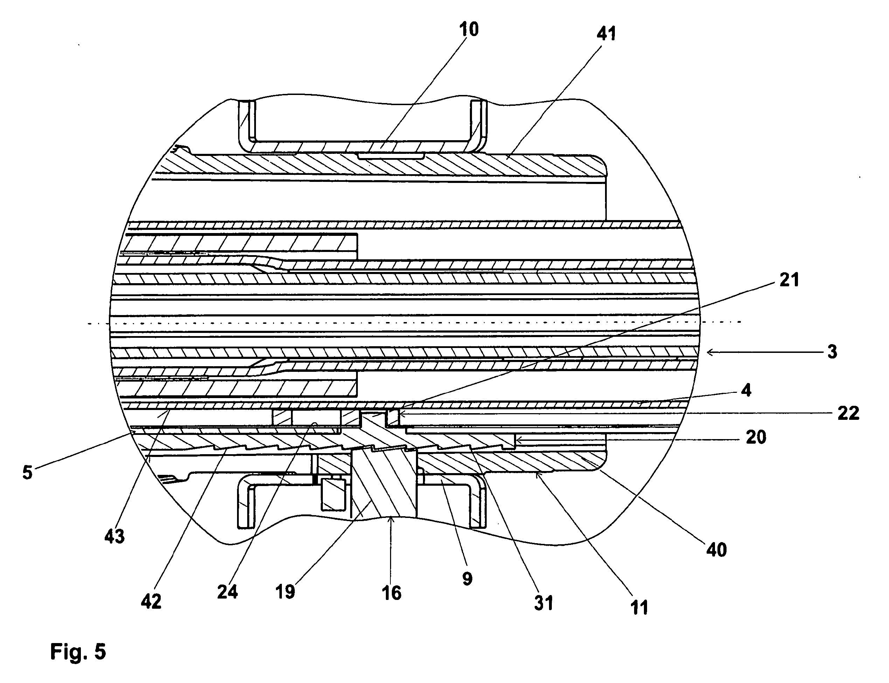

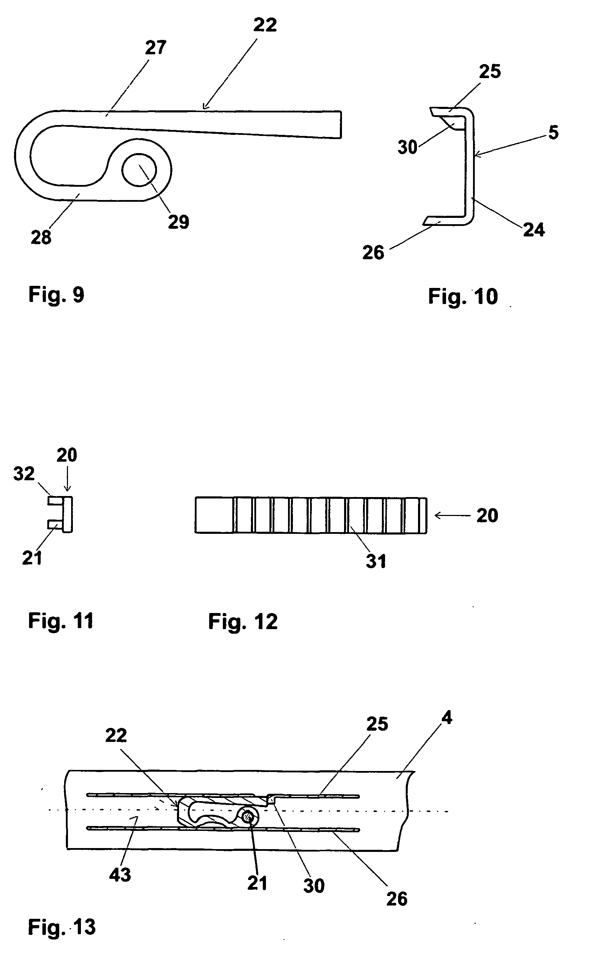

Ein Ausführungsbeispiel einer erfindungsgemäßen Lenksäule ist in den Fig. 1 bis 13 dargestellt. Die Lenksäule umfasst eine Trageinheit 1, die mit dem Chassis des Kraftfahrzeugs verbindbar ist, und eine Stelleinheit 2, welche einen an das lenkradseitige Ende der Lenksäule anschließenden Abschnitt der Lenkspindel 3 drehbar lagert. Die Stelleinheit 2 umfasst im gezeigten Ausführungsbeispiel ein Mantelrohr 4 und eine starr mit diesem verbundene, beispielsweise durch Verschweißung, und in Längsrichtung 6 der Lenksäule bzw. Lenkspindel 3 sich erstreckende Schiene 5.

Im geöffneten Zustand eines Spannmechanismus 7 ist die Stelleinheit 2 in Längsrichtung 6 der Lenksäule (=in Richtung der Längsachse der Lenkspindel 3) für eine Längenverstellung der Lenksäule und in die Stellrichtung 8 für eine Höhen- bzw. Neigungsverstellung der Lenksäule gegenüber der Trageinheit 1 verstellbar. Im geschlossenen Zustand des Spannmechanismus 7 ist die eingestellte Position der Stelleinheit 2 gegenüber der Trageinheit 1 festgestellt. Bezogen auf die Längenverstellung bleibt diese Feststellung erhalten, solange die in Längsrichtung der Lenksäule wirkende Kraftkomponente einer auf die Lenksäule einwirkenden Kraft unterhalb eines vorgegebenen Grenzwerts liegt (=Normalbetrieb). Wenn dieser Grenzwert überschritten wird (=Crashfall), so ist die Stelleinheit 2 gegenüber der Trageinheit 1 unter Energieabsorption in Längsrichtung 6 der Lenksäule verschiebbar, wie aus dem Folgenden hervorgehen wird. Bei betriebsgemäßem Gebrauch der Lenksäule ist im Crashfall der Spannmechanismus 7 im geschlossenen Zustand.

In Richtung der Höhen- bzw. Neigungsverstellung wird im geschlossenen Zustand des Spannmechanismus 7 eine möglichst hohe Feststellkraft aufgebracht.

Im gezeigten Ausführungsbeispiel ist die Stelleinheit 2 zwischen Seitenwangen 9, 10 der Trageinheit 1 angeordnet. Zwischen den Seitenwangen 9, 10 der Trageinheit 1 und der Stelleinheit 2 liegen weiters Seitenschenkel 40, 41 einer Zwischeneinheit 11, die die Stelleinheit 2, zumindest über einen Großteil ihres Umfangs, umgibt. Die Zwischeneinheit 11 ist im geöffneten Zustand des Spannmechanismus 7 gegenüber der Trageinheit 1 in die der Höhen- bzw. Neigungsverstellung entsprechende Stellrichtung 8 verstellbar. Hierzu ist sie um eine Schwenkachse 12 gegenüber der Trageinheit 1 verschwenkbar. Die Zwischeneinheit 11 ist mit der Trageinheit 1 bezogen auf die Längsrichtung 6 der Lenksäule unverschiebbar verbunden, beispielsweise (auch) über die Ausbildung dieser Schwenkachse 12. Die Stelleinheit 2 ist gegenüber der Zwischeneinheit 11 in die Stellrichtung 8 unverschiebbar, im geöffneten Zustand des Spannmechanismus 7 zur Längseinstellung der Lenksäule gegenüber der Zwischeneinheit 11 in die Längsrichtung 6 verschiebbar.

Der Spannmechanismus 7 umfasst einen quer zur Lenkspindel 3, insbesondere rechtwinkelig zur Längsrichtung 6 der Lenksäule, verlaufenden Spannbolzen 13, der in Form von Langlöchern ausgebildete Öffnungen 14, 15 in den Seitenwangen 9, 10 durchsetzt. In diesen Öffnungen 14, 15 ist der Spannbolzen 13 bei der Höhen- bzw. Neigungsverstellung der Lenksäule in die Stellrichtung 8 verschiebbar. Von den Rändern dieser Öffnungen 14, 15 wird der Spannbolzen 13 in die Längsrichtung 6 gegenüber der Trageinheit 1 unverschiebbar gehalten. Der Spannbolzen 13 durchsetzt weiters Öffnungen in den Seitenschenkeln 40, 41 der Zwischeneinheit 11, wodurch er gegenüber der Zwischeneinheit 11 in die Stellrichtung 8 unverschiebbar gehalten ist. Auch wird die Zwischeneinheit 11 dadurch in die Längsrichtung 6 unverschiebbar gegenüber der Trageinheit 1 gehalten.

Auf dem Spannbolzen 13 sind beidseitig der Seitenwangen 9, 10 der Trageinheit 1 Arretierteile 16, 17 angeordnet, die vom Spannbolzen 13 durch Öffnungen durchsetzt werden und in Richtung der Achse des Spannbolzens 13 axial verschiebbar sind.

Das eine Arretierteil 16 besitzt einen Abschnitt, in welchem es vom Spannbolzen 13 durchsetzt wird und einen über einen Verbindungsabschnitt 18 mit diesem verbundenen Abschnitt 19, in welchem es wie weiter unten beschrieben mit einem Eingriffsteil 20 zusammenwirkt.

Das Arretierteil 17 und das Arretierteil 16 im Bereich seines vom Spannbolzen 13 durchsetzten Abschnitts werden im geschlossenen Zustand des Spannmechanismus 7 an die Seitenwangen 9, 10 der Trageinheit 1 angedrückt, um die Verstellung der Lenksäule in die Stellrichtung 8 festzustellen. Die Feststellung in die Verstellrichtung 8 kann durch Reibschluss erfolgen. Auch formschlüssig zusammenwirkende Elemente, beispielsweise Verzahnungen können vorgesehen sein.

Der Abschnitt 19 des Arretierteils 16 durchsetzt eine Öffnung in der Seitenwange 9 (die Seitenwange 9 könnte auch oberhalb des Abschnitts 19 des Arretierteils 16 enden) und eine Öffnung im Seitenschenkel 40 der Zwischeneinheit 11 und ist im geschlossenen Zustand des Spannmechanismus 7 mit dem Eingriffsteil 20 verspannt. Der Abschnitt 19 des Arretierteils 16, der als Ganzes auf einer Seite des Spannbolzens 13 liegt, ist gegen eine Verschiebung in Längsrichtung 6 der Lenksäule gegenüber der Trageinheit 1 von den Rändern der durchsetzten Öffnung in der Seitenwange 9 und/oder von den Rändern der durchsetzten Öffnung im Seitenschenkel 40 der Zwischeneinheit 11 unverschiebbar gehalten.

Das Eingriffsteil 20 ist mit einem Biegedraht oder -streifen verbunden, der in einem Gehäuse angeordnet ist, welches von der im Querschnitt U-förmigen Schiene 5 in Verbindung mit einem Abschnitt des Mantelrohrs 4 gebildet wird. Das Eingriffsteil 20 weist hierzu einen von einem Stift gebildeten Mitnehmer 21 auf, der durch einen Schlitz 23 in der von der Lenkspindel 3 abgelegenen, rechtwinkelig zum Spannbolzen 13 stehenden Wand 24 der Teile des Gehäuses bildenden Schiene 5 ragt, die den die beiden Seitenschenkel 25, 26 der Schiene 5 verbindenden Basisschenkel darstellt. Der Schlitz 23 erstreckt sich in die Längsrichtung 6 der Lenksäule.

Über den durch diesen Schlitz 23 ragenden Mitnehmer 21 ist das Eingriffsteil 20 weiters in Längsrichtung der Stelleinheit 2 von dieser verschiebbar geführt. Denkbar und möglich ist auch eine Anordnung des Mitnehmers am Biegedraht oder -streifen 22. Die verschiebbare Führung des Eingriffsteils 20 von der Stelleinheit 2 kann auch in anderer Weise als dargestellt erfolgen.

Der Biegedraht oder -streifen 22 besitzt über eine Umbiegung von vorzugsweise 180° verbundene Schenkel 27, 28, die sich im Wesentlichen in Längsrichtung 6 der Lenksäule erstrecken. Die beiden Schenkel 27, 28 liegen an gegenüberliegenden Seiten des Gehäuses an, und zwar an den Innenflächen der Seitenschenkel 25, 26 der Schiene 5. Der Biegeradius des Biegedrahts oder -streifens 22 bei seiner Verformung, insbesondere während der fortschreitenden Biegung, im Crashfall wird dadurch begrenzt.

Zur Verbindung des Eingriffsteils 20 mit dem Biegedraht oder -streifen 22 ragt im gezeigten Ausführungsbeispiel der stiftförmige Mitnehmer 21 in eine Bohrung 29 im Schenkel 28. Andere Verbindungen des Eingriffsteils 20 mit dem Biegedraht oder -streifen 22 sind denkbar und möglich.

Der andere, nicht mit dem Eingriffsteil 20 verbundene Schenkel 27 des Biegedrahts oder - streifens 22 stützt sich an einem Anschlag 30 der Schiene 5 ab, von dem er bei einer Verschiebung der Stelleinheit 2 gegenüber der Trageinheit 1 in Längsrichtung 6 der Lenksäule mitgenommen wird. Andere Verbindungen des Schenkels 27 mit dem Gehäuse, in dem der Biegedraht oder -streifen 22 angeordnet ist, um den Schenkel 27 im Crashfall in Längsrichtung 6 der Lenksäule mitzunehmen, sind denkbar und möglich.

Der Abschnitt 19 des Arretierteils 16 besitzt zur Blockierung einer Verschiebung des Eingriffsteils 20 im geschlossenen Zustand des Spannmechanismus 7 gegenüber dem Arretierteil 16 in Längsrichtung 6 der Lenksäule eine am Eingriffsteil 20 anliegende Verzahnung 42, die mit einer Verzahnung 31 des Eingriffsteils zusammenwirkt. Falls beim Schließen des Spannmechanismus 7 diese beiden Verzahnungen in einer Zahn-auf-Zahn-Stellung aneinander zu liegen kommen, so wird zumindest nach einer geringfügigen anfänglichen Verschiebung (die kleiner als der Zahnabstand der Verzahnung ist) eine weitere Verschiebung des Eingriffsteils 20 gegenüber dem Arretierteil 16 blockiert.

Auch andere formschlüssige Verbindungen zwischen dem Arretierteil 16 und dem Eingriffsteil 20 sind denkbar und möglich, beispielsweise über in Löcher eingreifende Bolzen. Eine die Längsachse (=Drehachse) der Lenkspindel 3 durchsetzende und parallel zum Spannbolzen 13 liegende Ebene durchsetzt das Arretierteil 16 und Eingriffsteil 20 im Bereich ihres Eingriffs. Der Spannbolzen 13 liegt im gezeigten Ausführungsbeispiel oberhalb dieser Ebene. Auch eine Lage unterhalb dieser Ebene ist denkbar und möglich.

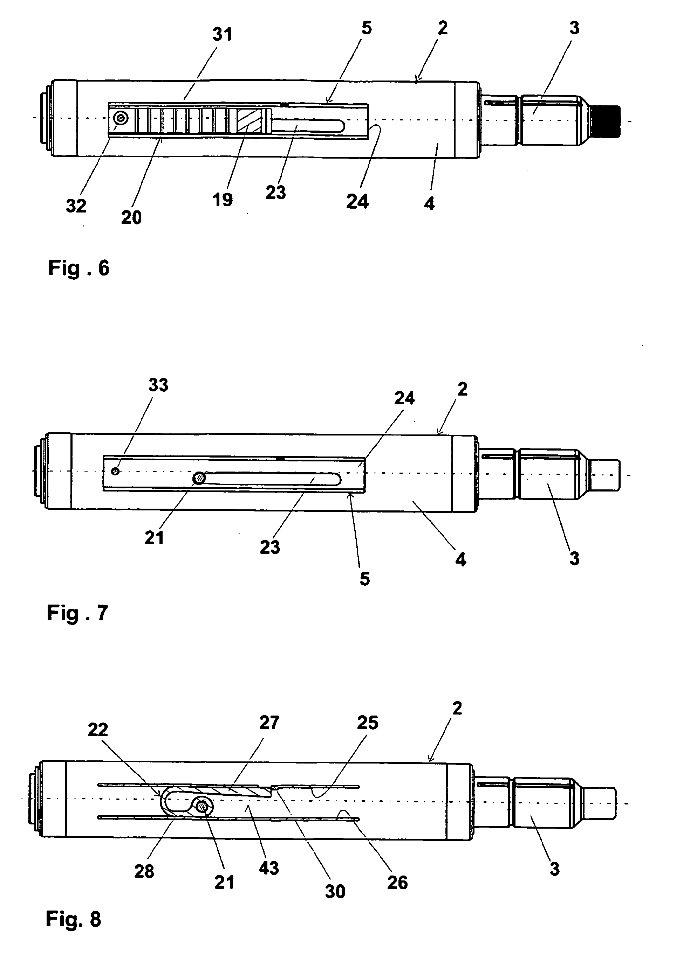

Im Normalbetrieb ist das Eingriffsteil 20 gegenüber der Stelleinheit 2 in Längsrichtung 6 der Lenksäule unverschiebbar gehalten. Dies kann nur durch Verbindung der beiden Teile über den mindestens einen Biegedraht oder -streifen 22 bewirkt sein. Im gezeigten Ausführungsbeispiel ist zusätzlich ein Stift 32 vorhanden, der in eine Öffnung 33 (vgl. Fig. 7) der Schiene 5 eingreift. Wenn in Längsrichtung 6 der Lenksäule eine einen vorgebbaren Grenzwert überschreitende Kraft ausgeübt wird (=Crashfall), so wird der Stift 32 abgeschert.

Da im Normalbetrieb (=wenn im geschlossenen Zustand des Spannmechanismus 7 die in Längsrichtung 6 auf die.Stelleinheit 2 einwirkende Kraft Null ist oder unterhalb des Grenzwerts liegt) das Eingriffsteil 20 bezogen auf die Längsrichtung 6 der Lenksäule unverschiebbar gegenüber der Stelleinheit 2 gehalten ist, wird im geschlossenen Zustand des Spannmechanismus 7 durch das Zusammenwirken des Abschnitts 19 des Arretierteils 16 mit dem Eingriffsteil 20 eine Feststellung der Stelleinheit 2 gegenüber der Trageinheit 1 in Längsrichtung 6 der Lenksäule bewirkt. Zusätzliche Feststellelemente zur Feststellung der Längsverstellung können vorgesehen sein. Im gezeigten Ausführungsbeispiel weisen der vom Spannbolzen 13 durchsetzte Abschnitt des Arretierteils 16 und das Arretierteil 17 Fortsätze 34, 35 auf, die durch die Öffnungen 14, 15 in den Seitenwangen 9, 10 der Trageinheit 1 ragen und an die Seitenschenkel 40, 41 der Zwischeneinheit 11 angepresst sind. Dadurch werden Anlageabschnitte 36, 37 der Zwischeneinheit 11 an das Mantelrohr 4 angedrückt und halten dieses reibschlüssig, oder auch formschlüssig, gegen eine Verschiebung in Längsrichtung 6 der Lenksäule mit einer Haltekraft (die in den Grenzwert für die in Längsrichtung der Lenksäule wirkenden Kraftkomponente eingeht, oberhalb von der es zu einer Verschiebung der Stelleinheit 2 gegenüber der Trageinheit 1 kommt).

Der Spannmechanismus 7 kann in herkömmlicher Weise ausgebildet sein. Beispielsweise ist ein zum Öffnen und Schließen des Spannmechanismus 7 dienender Spannhebel 38 mit einer Nockenscheibe 39 verbunden, die er bei einer Verdrehung um die Achse des Spannbolzens 13 mitnimmt und die mit einer Kulissenscheibe zusammenwirkt. Die Kulissenscheibe ist hier einteilig mit dem Arretierteil 16 ausgebildet. Auch eine separate Kulissenscheibe kann vorhanden sein. Weiter können auch bekannte Anordnungen mit Wälzkörpern als Spannsystem eingesetzt sein. Auch andere Ausbildungen des Spannmechanismus 7 sind denkbar und möglich.

Wenn der Spannmechanismus 7 ausgehend von seinem geöffneten Zustand geschlossen wird, so werden die Arretierteile 16, 17 in axialer Richtung des Spannbolzens 13 verstellt. Hierbei kommen die Feststellelemente für die Höhen- bzw. Neigungsverstellung in Eingriff (durch Andrücken der Reibflächen der Arretierteile 16, 17 an die Reibflächen der Seitenwangen 9, 10). Weiters wird der im geöffneten Zustand des Spannmechanismus 7 vom Eingriffsteil 20 beabstandete Abschnitt 19 des Arretierteils 16 an das Eingriffsteil 20 angedrückt. Weiters werden die gegebenenfalls vorhandenen Fortsätze 34, 35 an die Zwischeneinheit 11 angedrückt. Die Höhen- bzw. Neigungsverstellung und die Längsverstellung sind somit festgestellt.

Wenn eine einen Grenzwert überschreitende Kraft in Längsrichtung 6 der Lenksäule wirkt (=Crashfall) so wird der Stift 32 abgeschert und die Stelleinheit 2 in Längsrichtung 6 gegenüber der Trageinheit 1 (in eine zur Fahrzeugfront weisende Richtung) verschoben, wobei sich teleskopierbare Abschnitte der Lenkspindel 2 ineinander schieben und sich die Stelleinheit 2 gegenüber dem vom Arretierteil 16 gehaltenen Eingriffsteil 20 verschiebt und hierbei der Biegedraht oder -streifen 22 verformt wird. Diese Verformung umfasst insbesondere die Änderung der Stelle der Umbiegung zwischen den Schenkeln 27, 28. Durch diese plastische Verformung des Biegedrahts oder -streifens 22 wird Energie aufgezehrt.

Im gezeigten Ausführungsbeispiel vergrößert sich die Dicke des Schenkels 27 zu seinem freien Ende hin, beispielsweise keilförmig. Dadurch und da der Biegedraht oder -streifen 22 zwischen den von den Seitenschenkeln 25, 26 gebildeten Seitenwänden des Gehäuses eingesperrt ist, kommt es bei einer zunehmenden Verschiebung der Stelleinheit 2 gegenüber der Trageinheit 1 schließlich zu einem Anlaufen des Abschnitts 28 (im Bereich, in dem sie mit der Bohrung 29 versehen ist) an den sich verdickenden Bereich des Schenkels 27, wodurch es zu einer zusätzlichen Verformungsarbeit durch Kompression kommt.

Durch die geometrische Ausbildung des Biegedrahts oder -streifens 22 kann eine gewünschte Kennlinie für die Energieaufzehrung erreicht werden. Hierzu kann der Querschnitt des Schenkels 27 über seiner Länge in Bezug auf seine Fläche und/oder in Bezug auf seine Kontur mit einem vordefinierten Verlauf ausgebildet sein.

Durch die Kapselung des Biegedrahts oder -streifens 22 in einem Gehäuse, insbesondere innerhalb der Schiene 5 zwischen der Wand 24 der Schiene 5, der Oberfläche 43 des Mantelrohrs 4, und den beiden Seitenschenkeln 25, 26 der Schiene 5, ist eine besonders definierter Kraftverlauf im Crashfall einstellbar. Der Abstand der Seitenschenkel 15, 26 der Schiene 5, der Querschnitt des Schenkels 28 des Biegedrahts oder -streifens 22, der Abstand zwischen der Oberfläche 43 des Mantelrohrs 4 und der Wand 24 der Schiene 5 können problemlos über ihre Länge entsprechend dimensioniert und mit unterschiedlichen Werten eingestellt werden.

Der abscherbare Stift 32 des Eingriffsteils 20 könnte auch entfallen. Das Eingriffsteil 20 könnte auch in anderer Weise in einer Ausgangsstellung gehalten sein, aus der es erst unter erhöhter Kraft verschiebbar ist, beispielsweise indem ein stiftförmiger Mitnehmer 21 eine den Schlitz 23 verjüngende Nase überfahren muss.

Der Biegedraht oder -streifen 22 könnte auch in anderer Weise als dargestellt ausgebildet sein. Es könnten auch zwei oder mehrere durch Zusammenwirken mit dem Eingriffsteil 20 verformte Biegedrähte oder -streifen vorhanden sein.

Auch auf beiden Seiten der Stelleinheit 2 könnten in der beschriebenen Weise ausgebildete Energieabsorptionseinrichtungen für die Längsverschiebung der Stelleinheit 2 im Crashfall vorhanden sein.

Obwohl eine Ausbildung mit auf beiden Seiten der Stelleinheit 2 angeordneten Seitenwangen 9, 10 bevorzugt ist, gegen welche im geschlossenen Zustand des Spannmechanismus 7 Teile des Spannmechanismus verspannt werden, sind auch Ausbildungen denkbar und möglich, bei denen die Trageinheit nur eine auf einer Seite der Stelleinheit 2 liegende Seitenwange aufweist.

Im Gegensatz hierzu ist es auch möglich, beidseits des Mantelrohrs 4 entsprechende Abschnitte 19 vorzusehen, die in jeweils zugeordnete Eingriffsteile 20 formschlüssig eingreifen, wobei das Eingriffsteil mit jeweils einem zugeordneten Biegedraht oder Biegestreifen 22 zusammenwirkt, von dem zumindest ein Abschnitt bei der Verschiebung der Stelleinheit 2 gegenüber dem Eingriffsteil 20 von der Stelleinheit 2 mitgenommen wird, wobei sich der jeweilige Biegedraht oder -streifen 22 bei der Verschiebung der Stelleinheit 2 gegenüber dem Eingriffsteil 20 verformt.

In einer weiteren Ausbildung der Erfindung ist zur Steuerung der Energieabsorption die Einrichtung derart ausgebildet, dass steuerbar im Crashfall entweder einer, beide oder keiner der Biegestreifen umgeformt werden. Hierzu sind in einer ersten Variante die beiden Mitnehmer 21 als in ihrer Achsrichtung verschiebliche Stifte ausgebildet, die im Bedarfsfall in Eingriff oder außer Eingriff mit der jeweiligen zugeordneten Bohrung 29 gebracht werden. In einer zweiten Variante wird der Abschnitt 19 in Eingriff oder außer Eingriff mit dem zugeordneten Eingriffsteil 20 gebracht, obwohl die Spanneinrichtung 7 im geschlossenen Zustand ist. Als Stelleinrichtung können pyrotechnische Schalter und/oder andere elektrisch, magnetisch, hydraulisch oder pneumatisch wirkende Schalter eingesetzt sein. Die Regelung kann auf Basis von Informationen wie beispielsweise: Fahrer angegurtet ja/nein, Gewicht des Fahrers, Abstand des Fahrers von der Lenksäule usw. erfolgen.

Entsprechend ist die Lenksäule derart ausgebildet, dass der Mitnehmer 21 oder der Abschnitt 19 des Arretierteils 16 durch eine Steuerung gezielt derart ansteuerbar ist, dass zumindest im Crashfall die Verbindung zwischen Abschnitt 19 des Arretierteils 16 und Biegedraht oder -streifen 22 wahlweise hergestellt ist oder nicht hergestellt ist.

Durch eine zusätzliche konventionelle Absorptionseinrichtung, wie sie im Stand der Technik allgemein bekannt ist, kann ein entsprechend unteres Niveau an Energieabsorption eingestellt werden.

Für die Höhen- bzw. Neigungsverstellung und/oder Längsverstellung könnten auch zusätzliche zusammenwirkende Reibflächen vorhanden sein, beispielsweise in Form von zusammenwirkenden Lamellen, wie dies von herkömmlichen Lenksäulen her bekannt ist.

Eine erfindungsgemäße Lenksäule könnte beispielsweise auch nur in die Längsrichtung 6 verstellbar ausgebildet sein. Bei einer solchen Ausführungsform könnte die Zwischeneinheit 11 entfallen und die vom Spannbolzen 13 durchsetzte Öffnung 14, 15 in einer jeweiligen Seitenwange 9, 10 der Trageinheit 1 könnte kreisförmig ausgebildet sein.

Eine sowohl in die Längsrichtung 6 als auch in die Stellrichtung 8 der Höhen- bzw. Neigungsrichtung verstellbare Lenksäule kann auch ohne eine Zwischeneinheit 11 ausgebildet sein. Hierbei könnten in der Stelleinheit 2 vom Spannbolzen 13 durchsetzte Langlöcher vorhanden sein, die sich in die Längsrichtung 6 der Lenksäule erstrecken. Beispielsweise könnte hierzu am Mantelrohr 4 mindestens ein nach oben oder unten abstehendes Teil angebracht sein, in dem diese Langlöcher angeordnet sind.

Die Trageinheit 1 könnte auch eine chassisfeste Untereinheit und eine im geschlossenen Zustand des Spannmechanismus 7 über diesen mit der Stelleinheit 2 verbundene Untereinheit umfassen, welche gegenüber der chassisfesten Untereinheit im Crashfall unter Energieabsorption in Längsrichtung 6 der Lenksäule verschiebbar ist, wie dies bekannt ist.

**Legende zu den Hinweisziffern:**

| | | | |
|---|---|---|---|
| 1 | Trageinheit | 31 | Verzahnung |
| 2 | Stelleinheit | 32 | Stift |
| 3 | Lenkspindel | 33 | Öffnung |
| 4 | Mantelrohr | 34 | Fortsatz |
| 5 | Schiene | 35 | Fortsatz |
| 6 | Längsrichtung | 36 | Anlageabschnitt |
| 7 | Spannmechanismus | 37 | Anlageabschnitt |
| 8 | Stellrichtung | 38 | Spannhebel |
| 9 | Seitenwange | 39 | Nockenscheibe |
| 10 | Seitenwange | 40 | Seitenschenkel |
| 11 | Zwischeneinheit | 41 | Seitenschenkel |
| 12 | Schwenkachse | 42 | Verzahnung |
| 13 | Spannbolzen | 43 | Oberfläche |
| 14 | Öffnung | | |
| 15 | Öffnung | | |
| 16 | Arretierteil | | |
| 17 | Arretierteil | | |
| 18 | Verbindungsabschnitt | | |
| 19 | Abschnitt | | |
| 20 | Eingriffsteil | | |
| 21 | Mitnehmer | | |
| 22 | Biegedraht oder-streifen | | |
| 23 | Schlitz | | |
| 24 | Wand | | |
| 25 | Seitenschenkel | | |
| 26 | Seitenschenkel | | |
| 27 | Schenkel | | |
| 28 | Schenkel | | |
| 29 | Bohrung | | |
| 30 | Anschlag | | |

## Patentansprüche

1. Lenksäule für ein Kraftfahrzeug, die zumindest in ihrer Längsrichtung (6) verstellbar ist, umfassend eine Trageinheit (1), die mit dem Chassis des Kraftfahrzeugs verbindbar ist, eine eine Lenkspindel (3) drehbar lagernde Stelleinheit (2) und einen Spannmechanismus (7), in dessen geöffnetem Zustand die Stelleinheit (2) gegenüber der Trageinheit (1) zumindest in die Längsrichtung (6) der Lenksäule verstellbar ist und in dessen geschlossenem Zustand die eingestellte Position der Stelleinheit (2) gegenüber der Trageinheit (1) in einem Normalbetrieb festgestellt ist und der mindestens ein Arretierteil (16) umfasst, das in Längsrichtung (6) der Lenksäule gegenüber der Trageinheit (1) unverschiebbar ist und das im geschlossenen Zustand des Spannmechanismus (7) mit einem Eingriffsteil (20) verspannt ist und in geöffnetem Zustand des Spannmechanismus (7) vom Eingriffsteil (20) beabstandet ist, wobei sich das Eingriffsteil (20) bei der Verstellung der Stelleinheit (2) gegenüber der Trageinheit (1) in Längsrichtung (6) der Lenksäule im geöffneten Zustand des Spannmechanismus (7) mit der Stelleinheit (2) mitbewegt und die Stelleinheit (2) derart mit dem Eingriffsteil (20) verbunden ist, dass sie im Normalbetrieb in Längsrichtung (6) der Lenksäule unverschiebbar gegenüber dem Eingriffsteil (20) gehalten ist und in einem Crashfall gegenüber dem Eingriffsteil (20) unter Energieabsorption in Längsrichtung (6) der Lenksäule verschiebbar ist, wobei das Eingriffsteil (20) mit mindestens einem Biegedraht oder -streifen (22) zusammenwirkt und wobei das Eingriffsteil (20) bei der Verschiebung der Stelleinheit (2) gegenüber dem Eingriffsteil (20) im Crashfall durch die Verspannung mit dem Arretierteil (16) unverschiebbar gegenüber dem Arretierteil (16) gehalten ist, wobei der Biegedraht oder -streifen (22) zwei über eine Umbiegung verbundene Schenkel (27, 28) aufweist, von denen einer am Eingriffsteil (20) festgelegt ist, und wobei zumindest ein Abschnitt des Biegedrahts oder -streifens (22) bei der Verschiebung der Stelleinheit (2) gegenüber dem Eingriffsteil (20) von der Stelleinheit (2) mitgenommen wird, wobei sich der Biegedraht oder -streifen (22) bei der Verschiebung der Stelleinheit (2) gegenüber dem Eingriffsteil (20) verformt, wobei der andere Schenkel (27) des Biegedrahts oder -streifens (22) sich bei der Verformung des Biegedrahts oder -streifens (22) im Crashfall an einem gegenüber der Stelleinheit bezogen auf die Längsrichtung (6) der Lenksäule unverschiebbaren Anschlag (30) abstützt..

2. Lenksäule nach Anspruch 1, **dadurch gekennzeichnet, dass** die beiden Schenkel (27, 28) über eine einzelne Umbiegung von 180° verbunden sind.

3. Lenksäule nach Anspruch 1 oder 2, **dadurch gekennzeichnet, dass** der Biegedraht oder -streifen von einem Gehäuse zumindest teilweise umschlossen ist.

4. Lenksäule nach einem der Ansprüche 1 bis 3, **dadurch gekennzeichnet, dass** zumindest einer der beiden Schenkel (27, 28) über seiner Länge einen unterschiedlichen Querschnitt aufweist.

5. Lenksäule nach Anspruch 3 oder 4, **dadurch gekennzeichnet, dass** die Schenkel (27, 28) ab einer vorgegebbaren Strecke der Verschiebung des Eingriffsteils (20) gegenüber der Stelleinheit (2) bei einer weiteren Verschiebung der Stelleinheit (2) derart verformt werden, daß eine Verquetschung der Schenkel (27, 28) zwischen den Seiten des Gehäuses auftritt.

6. Lenksäule nach einem der vorhergehenden Ansprüche, **dadurch gekennzeichnet, dass** das Eingriffsteil (20) von der Stelleinheit (2) in Längsrichtung (6) der Lenksäule verschiebbar geführt ist.

7. Lenksäule nach einem der Ansprüche 3 bis 6, **dadurch gekennzeichnet, dass** der Biegedraht oder -streifen (22) mit dem Eingriffsteil (20) über einen Mitnehmer (21) verbunden ist, der durch einen in Längsrichtung (6) der Lenksäule verlaufenden Schlitz (23) in einer Wand (24) des Gehäuses ragt.

8. Lenksäule nach Anspruch 7, **dadurch gekennzeichnet, dass** der Mitnehmer (21) oder der Abschnitt (19) des Arretierteils (16) durch eine Steuerung gezielt derart ansteuerbar ist, dass zumindest im Crashfall die Verbindung zwischen Abschnitt (19) des Arretierteils (16) und Biegedraht oder-streifen (22) wahlweise hergestellt ist oder nicht hergestellt ist.

9. Lenksäule nach Anspruch 7 oder 8, **dadurch gekennzeichnet, dass** die vom Mitnehmer (21) durchsetzte Wand (24) des Gehäuses von einer an der Stelleinheit (2) zumindest in Längsrichtung (6) der Lenksäule unverschiebbar festgelegten Schiene (5) gebildet wird.

10. Lenksäule nach Anspruch 9, **dadurch gekennzeichnet, dass** der Anschlag (30) von der Schiene (5) ausgebildet wird.

11. Lenksäule nach einem der Ansprüche 1 bis 10, **dadurch gekennzeichnet, dass** das Arretierteil (16) und das Eingriffsteil (20) zusammenwirkende Eingriffselemente aufweisen, vorzugsweise zusammenwirkende Verzahnungen (42, 31), die im geschlossenen Zustand des Spannmechanismus (7) einer gegenseitigen Verschiebung formschlüssig entgegenwirken.

12. Lenksäule nach einem der Ansprüche 1 bis 11, **dadurch gekennzeichnet, dass** das Arretierteil (16) beim Schließen des Spannmechanismus (7) in axialer Richtung eines Spannbolzens (13) des Spannmechanismus (7) gegenüber der Stelleinheit (2) verschoben wird.

13. Lenksäule nach einem der Ansprüche 1 bis 12, **dadurch gekennzeichnet, dass** die Trageinheit (1) beidseitig der Stelleinheit (2) liegende Seitenwangen (9, 10) aufweist, die vom Spannbolzen (13) des Spannmechanismus (7) durch Öffnungen (14, 15) durchsetzt werden, und das Arretierteil (16) eine der Seitenwangen (9, 10) der Trageinheit (1) und/oder einen Seitenschenkel einer Zwischeneinheit (11), die zwischen den Seitenwangen (9, 10) der Trageinheit (1) und der Stelleinheit (2) angeordnet ist, durch eine Öffnung durchsetzt und von den Rändern der Öffnung der Seitenwange (9, 10) der Trageinheit (1) und/oder von den Rändern der Öffnung des Seitenschenkels der Zwischeneinheit (11) in Längsrichtung (6) der Lenksäule gegenüber der Trageinheit (1) unverschiebbar gehalten ist.

## Claims

1. A steering column for a motor vehicle which is adjustable at least in its longitudinal direction (6), comprising a support unit (1) which is able to be connected to the chassis of the motor vehicle, an adjustment unit (2) which rotatably bears a steering shaft (3), and a tensioning mechanism (7), in the opened state of which the adjustment unit (2) is adjustable relative to the support unit (1) at least in the longitudinal direction (6) of the steering column, and in the closed state of which the set position of the adjustment unit (2) is fixed relative to the support unit (1) in normal operation and which comprises at least one locking part (16) which is non-displaceable in the longitudinal direction (6) of the steering column relative to the support unit (1) and which in the closed state of the tensioning mechanism (7) is braced with an engagement part (20) and in the opened state of the tensioning mechanism (7) is spaced apart from the engagement part (20), the engagement part (20) upon the adjustment of the adjustment unit (2) relative to the support unit (1) in the longitudinal direction (6) of the steering column in the opened state of the tensioning mechanism (7) moving jointly with the adjustment unit (2) and the adjustment unit (2) being connected to the engagement part (20) in such a way that in normal operation in the longitudinal direction (6) of the steering column it is held non-displaceably relative to the engagement part (20) and in the event of a crash is displaceable relative to the engagement part (20) in the longitudinal direction (6) of the steering column, with the absorption of energy, the engagement part (20) cooperating with at least one bending wire or bending strip (22), and the engagement part (20) upon the displacement of the adjustment unit (2) relative to the engagement part (20) in the event of a crash being held non-displaceably relative to the locking part (16) by the bracing with the locking part (16), the bending wire or bending strip (22) having two limbs (27, 28) which are connected via a recurve, one of which is secured to the engagement part (20), and at least one section of the bending wire or bending strip (22) upon the displacement of the adjustment unit (2) relative to the engagement part (20) being entrained by the adjustment unit (2), the bending wire or bending strip (22) deforming upon the displacement of the adjustment unit (2) relative to the engagement part (20), the other limb (27) of the bending wire or bending strip (22) being supported upon the deformation of the bending wire or bending strip (22) in the event of a crash on a stop (30) which is non-displaceable relative to the adjustment unit in relation to the longitudinal direction (6) of the steering column.

2. A steering column according to Claim 1, **characterised in that** the two limbs (27, 28) are connected via a single recurve of 180°.

3. A steering column according to Claim 1 or 2, **characterised in that** the bending wire or bending strip is at least partially encompassed by a housing.

4. A steering column according to one of Claims 1 to 3, **characterised in that** at least one of the two limbs (27, 28) has a different cross-section over its length.

5. A steering column according to Claim 3 or 4, **characterised in that** the limbs (27, 28), starting from a pre-settable distance of the displacement of the engagement part (20) relative to the adjustment unit (2), upon a further displacement of the adjustment unit (2) are deformed such that squeezing of the limbs (27, 28) between the sides of the housing occurs.

6. A steering column according to one of the preceding claims, **characterised in that** the engagement part (20) is displaceably guided in the longitudinal direction (6) of the steering column by the adjustment unit (2).

7. A steering column according to one of Claims 3 to 6, **characterised in that** the bending wire or bending strip (22) is connected to the engagement part (20) via a tappet (21) which proj ects through a slot (23), extending in the longitudinal direction (6) of the steering column, in a wall (24) of the housing.

8. A steering column according to Claim 7, **characterised in that** the tappet (21) or the section (19) of the locking part (16) can be activated selectively by a control means such that, at least in the event of a crash, the connection between the section (19) of the locking part (16) and the bending wire or bending strip (22) is either produced or not produced.

9. A steering column according to Claim 7 or 8, **characterised in that** the wall (24) ofthe housing which is penetrated by the tappet (21) is formed by a rail (5) which is fixed on the adjustment unit (2) non-displaceably at least in the longitudinal direction (6) of the steering column.

10. A steering column according to Claim 9, **characterised in that** the stop (30) is formed by the rail (5).

11. A steering column according to one of Claims 1 to 10, **characterised in that** the locking part (16) and the engagement part (20) have cooperating engagement elements, preferably cooperating sets of toothing (42, 31), which in the closed state of the tensioning mechanism (7) counteract reciprocal displacement in a positively-locking manner.

12. A steering column according to one of Claims 1 to 11, **characterised in that** the locking part (16), upon closing of the tensioning mechanism (7), is displaced relative to the adjustment unit (2) in the axial direction of a tensioning bolt (13) of the tensioning mechanism (7).

13. A steering column according to one of Claims 1 to 12, **characterised in that** the support unit (1) has side cheeks (9, 10) located on either side ofthe adjustment unit (2), which cheeks are penetrated by the tensioning bolt (13) of the tensioning mechanism (7) through openings (14, 15), and the locking part (16) penetrates one of the side cheeks (9, 10) of the support unit (1) and/or a side member of an intermediate unit (11), which is arranged between the side cheeks (9, 10) of the support unit (1) and of the adjustment unit (2), through an opening, and is held non-displaceably in the longitudinal direction (6) of the steering column relative to the support unit (1) by the edges of the opening of the side cheek (9, 10) of the support unit (1) and/or by the edges of the opening of the side member of the intermediate unit (11).

## Revendications

1. Colonne de direction pour un véhicule automobile, pouvant être réglée au moins dans sa direction longitudinale (6), comprenant une unité de support (1) pouvant être reliée au châssis du véhicule automobile, une unité de réglage (2) où est logé un arbre de direction (3) rotatif et un mécanisme de serrage (7) dans l'état d'ouverture duquel l'unité de réglage (2) est réglable par rapport à l'unité de support (1) au moins dans la direction longitudinale (6) de la colonne de direction, et dans l'état de fermeture duquel la position réglée de l'unité de réglage (2) est fixée par rapport à l'unité de support (1) en fonctionnement normal, et qui comprend au moins une pièce d'arrêt (16) immobile par rapport à l'unité de support (1) dans la direction longitudinale (6) de la colonne de direction, serrée contre une pièce de contact (20) dans l'état de fermeture du mécanisme de serrage (7) et espacée de la pièce de contact (20) dans l'état d'ouverture du mécanisme de serrage (7), la pièce de contact (20) se déplaçant conjointement à l'unité de réglage (2) lors du déplacement de l'unité de réglage (2) par rapport à l'unité de support (1) dans la direction longitudinale (6) de la colonne de direction dans l'état d'ouverture du mécanisme de serrage (7), et l'unité de réglage (2) étant reliée à la pièce de contact (20) de manière à être maintenue immobile par rapport à la pièce de contact (20) en fonctionnement normal dans la direction longitudinale (6) de la colonne de direction, et à être déplaçable par rapport à la pièce de contact (20) dans la direction longitudinale (6) de la colonne de direction par absorption d'énergie dans un cas de collision, la pièce de contact (20) coopérant avec au moins un fil ou un ruban de flexion (22), et la pièce de contact (20) étant maintenue immobile par rapport à la pièce d'arrêt (16) par blocage avec la pièce d'arrêt (16) lors du déplacement de l'unité de réglage (2) par rapport à la pièce de contact (20) en cas de collision, le fil ou le ruban de flexion (22) présentant deux branches (27, 28) reliées par un coude, dont l'une est fixée à la pièce de contact (20), et au moins une partie du fil ou du ruban de flexion (22) étant entraînée par l'unité de réglage (2) lors du déplacement de l'unité de réglage (2) par rapport à la pièce de contact (20), le fil ou le ruban de flexion (22) se déformant lors du déplacement de l'unité de réglage (2) par rapport à la pièce de contact (20), l'autre branche (27) du fil ou du ruban de flexion (22) s'appuyant contre une butée (30) immobile par rapport à l'unité de réglage dans la direction longitudinale (6) de la colonne de direction lors de la déformation du fil ou du ruban de flexion (22) en cas de collision.

2. Colonne de direction selon la revendication 1, **caractérisée en ce que** les deux branches (27, 28) sont reliées par un coude cintré sur 180°.

3. Colonne de direction selon la revendication 1 ou la revendication 2, **caractérisée en ce**
**que** le fil ou le ruban de flexion est au moins partiellement entouré par un boîtier.

4. Colonne de direction selon l'une des revendications 1 à 3, **caractérisée en ce qu'**au moins une des deux branches (27, 28) présente une section transversale variable sur sa longueur.

5. Colonne de direction selon la revendication 3 ou la revendication 4, **caractérisée en ce que**, les branches (27, 28) sont déformées à partir d'une course de déplacement prédéfinissable de la pièce de contact (20) par rapport à l'unité de réglage (2) lors d'un nouveau déplacement de l'unité de réglage (2), de manière à produire un écrasement des branches (27, 28) entre les côtés du boîtier.

6. Colonne de direction selon l'une des revendications précédentes, **caractérisée en ce que** la pièce de contact (20) est coulissée par l'unité de réglage (2) dans la direction longitudinale (6) de la colonne de direction.

7. Colonne de direction selon l'une des revendications 3 à 6, **caractérisée en ce que** le fil ou le ruban de flexion (22) est relié à la pièce de contact (20) par un entraîneur (21) faisant saillie au travers d'une fente (23) s'étendant dans une paroi (24) du boîtier dans la direction longitudinale (6) de la colonne de direction.

8. Colonne de direction selon la revendication 7, **caractérisée en ce que** l'entraîneur (21) ou la section (19) de la pièce d'arrêt (16) peuvent être commandés de manière ciblée par une commande, de manière à réaliser ou à ne pas réaliser sélectivement la liaison entre la section (19) de la pièce d'arrêt (16) et le fil ou le ruban de flexion (22) au moins dans le cas de collision.

9. Colonne de direction selon la revendication 7 ou la revendication 8, **caractérisée en ce que** la paroi (24) du boîtier traversée par l'entraîneur (21) est formée par un rail (5) fixé à l'unité de réglage (2) de manière à être immobilisé au moins dans la direction longitudinale (6) de la colonne de direction.

10. Colonne de direction selon la revendication 9, **caractérisée en ce que** la butée (30) est réalisée par le rail (5).

11. Colonne de direction selon l'une des revendications 1 à 10, **caractérisée en ce que** la pièce d'arrêt (16) et la pièce de contact (20) présentent des éléments d'engrènement qui coopèrent entre eux, préférentiellement des dentures (42, 31) coopérant entre elles, lesquelles s'opposent mécaniquement à un déplacement réciproque dans l'état de fermeture du mécanisme de serrage (7).

12. Colonne de direction selon l'une des revendications 1 à 11, **caractérisée en ce que** lors de la fermeture du mécanisme de serrage (7), la pièce d'arrêt (16) est déplacée par rapport à l'unité de réglage (2) dans la direction axiale d'une goupille de serrage (13) du mécanisme de serrage (7).

13. Colonne de direction selon l'une des revendications 1 à 12, **caractérisée en ce que** l'unité de support (1) présente des mâchoires latérales (9, 10) disposées de part et d'autre de l'unité de réglage (2), lesquelles sont traversées par des goupilles de serrage (13) du mécanisme de serrage (7) passant par des ouvertures (14, 15), et **en ce que** la pièce d'arrêt (16) traverse par une ouverture une des mâchoires latérales (9, 10) de l'unité de support (1) et/ou une branche latérale d'une unité intercalaire (11) disposée entre les mâchoires latérales (9, 10) de l'unité de support (1) et de l'unité de réglage (2), et est maintenue immobile par rapport à l'unité de support (1) dans la direction longitudinale (6) de la colonne de direction par les bords de l'ouverture des mâchoires latérales (9, 10) de l'unité de support (1) et/ou par les bords de l'ouverture de la branche latérale de l'unité intercalaire (11).
